# EUROPEAN PATENT SPECIFICATION

(11) **EP 2 857 442 B1**
(45) Date of publication and mention of the grant of the patent: **14.10.2020**
(21) Application number: 13194799.6
(22) Date of filing: 28.11.2013
(51) Int. Cl.: C08J 5/22, B01D 61/42, C02F 1/469

(54) **Ion exchange membrane for flow-electrode capacitive deionization device and flow-electrode capacitive deionization device including the same**
Ionenaustauschermembran für kapazitative Deionisierungsvorrichtung mit Durchflusselektrode und kapazitive Deionisierungsvorrichtung mit Durchflusselektrode damit
Membrane d'échange d'ions pour dispositif de déionisation capacitive à électrode de flux et dispositif de déionisation capacitive à électrode de flux l'incluant

(30) Priority: 24.09.2013 KR 20130113114
(43) Date of publication of application: 08.04.2015
(73) Proprietor: Toray Advanced Materials Korea Inc., Gumi-si, Gyeongsangbuk-do 39389 (KR)
(72) Inventor: Choi, Young-Woo, CHEONGJU (KR); Lee, Mi-Soon, DAEJEON (KR); Yang, Tae-Hyun, DAEJEON (KR); Yoon, Young-Gi, DAEJON (KR); Park, Seok-Hee, DAEJEON (KR); Kim, Dong-Gook, DAEJEON (KR); YANG, Seung-Cheol, 695-971 JEJU-DO (KR)
(74) Representative: EP&C

(56) References cited:
- WO-A1-2009/131294
- WO-A1-2011/073637
- WO-A1-2011/073641
- WO-A1-2013/011272
- WO-A1-2013/153360
- KR-A- 20120 015 964
- SANDIP MAURYA ET AL: "Stability of composite anion exchange membranes with various functional groups and their performance for energy conversion", JOURNAL OF MEMBRANE SCIENCE, vol. 443, 1 September 2013 (2013-09-01), pages 28-35, XP055169661, ISSN: 0376-7388, DOI: 10.1016/j.memsci.2013.04.035
- SUNG-IL JEON ET AL: "Desalination via a new membrane capacitive deionization process utilizing flow-electrodes", ENERGY & ENVIRONMENTAL SCIENCE, vol. 6, no. 5, 1 January 2013 (2013-01-01) , page 1471, XP055079854, ISSN: 1754-5692, DOI: 10.1039/c3ee24443a

## Description

### BACKGROUND OF THE INVENTION

### 1. Field of the Invention

The present invention relates to an ion exchange membrane for a flow-electrode capacitive deionization device and a flow-electrode capacitive deionization device including the same.

### 2. Description of the Related Art

Capacitive deionization (CDi) is a technology in which ions contained in brackish water or the like are adsorbed onto the surface of electrodes and thus removed using a principle of adsorbing ions onto the surface of charged electrodes by electrostatic attraction, and potentiality thereof is recognized in water treatment fields, including water purification or wastewater treatment against water pollution and water shortage, desalination of sea water, etc.

Specifically, when a potential is applied within an overpotential range to polarized electrodes, positive and negative charges are charged in an anode and a cathode, respectively, and when feed water such as brackish water is supplied between the charged electrodes, cations and anions are adsorbed onto the cathode and the anode, respectively, by the action of electrostatic attraction between the charged electrodes and the ions, thus achieving desalination.

Such a capacitive deionization technology is advantageous because energy cost may be drastically reduced in the course of desalination compared to conventional evaporation or reverse osmosis methods, and also adsorption and desorption of the ions may be controlled via changes in electrode potential, making it possible to stably operate the desalination process. Furthermore, this technology is eco-friendly because pollutants are not discharged during the operation.

In particular, flow-electrode capacitive deionization (FCDi) using flow electrodes which are fluidized-bed electrodes, rather than fixed-bed electrodes, is additionally advantageous because a continuous process is possible and coating of an electrode active material is obviated, and furthermore, energy may be stored in coincidence with storing the adsorbed ions in an additional container. Hence, this technology is receiving attention because it may be utilized in not only desalination but also energy storage fields.

Meanwhile, in flow-electrode capacitive deionization devices as well as capacitive deionization devices using fixed-based electrodes, it is generally known that ion removal efficiency may be increased by introducing charge barriers such as ion exchange membranes in order to prevent desalination efficiency from drastically decreasing as a result of discharging, into the feed water, a large amount of co-ions having the same polarity as that of each electrode among ions present in the pores upon applying a potential to each electrode [Korean Patent Application No. 2012-0015964].

FCDi using homogeneous ion exchange membranes is described in Jeon et al., Energy Environ. Scii, 2013, 6, 1471. However, in the case where the flow-electrode capacitive deionization device includes charge barriers, desalination efficiency may be greatly improved, but contact resistance between the ion exchange membranes and the electrodes may increase, which is undesirable. Therefore, there is an urgent need to develop ion exchange membranes which minimize contact resistance between the ion exchange membranes and the electrodes to thus maximize performance of the flow-electrode capacitive deionization device.

### SUMMARY OF THE INVENTION

Accordingly, the present invention has been made keeping in mind the above problems encountered in the related art, and an object of the present invention is to provide a cation exchange membrane and an anion exchange membrane, a manufacturing method thereof, and a flow-electrode capacitive deionization device including the cation exchange membrane and/or the anion exchange membrane, wherein, in the case where the cation exchange membrane and the anion exchange membrane, having excellent ion conductivity, are used as charge barriers of a flow-electrode capacitive deionization device, desalination efficiency may be remarkably improved compared to conventional commercial ion exchange membranes, and also stable operation of the flow-electrode capacitive deionization device is possible because of superior water resistance and heat resistance of the above ion exchange membranes.

In order to accomplish the above object, the present invention provides a cation exchange membrane for a flow-electrode capacitive deionization (FCDi) device, including a porous polymer substrate; and a polymer electrolyte incorporated into pores of the porous polymer substrate.

Also, the porous polymer substrate may be a porous hydrocarbonaceous film having a pore volume of 30 ∼ 70%, a pore size of 0.05 ∼ 0.1 µm and a thickness of 10 ∼ 55 µm.

Also, the polymer electrolyte may be formed by incorporating a solution including a crosslinkable aromatic polymer represented by Chemical Formula 1 below, a monomer having an aliphatic or aromatic ring with a vinyl group linked thereto, and an initiator into the porous polymer substrate and then performing crosslinking polymerization: 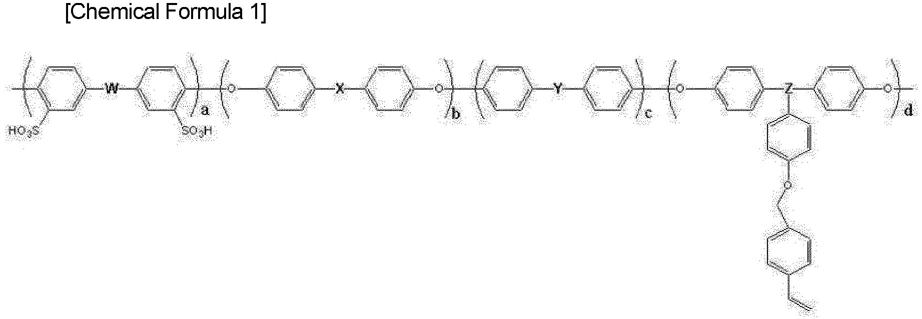 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c = b + d.

Furthermore, the monomer having an aliphatic or aromatic ring with a vinyl group linked thereto may be a vinylpyrrolidone monomer, a styrene monomer or a divinylbenzene monomer.

Also, the polymer electrolyte may be formed by incorporating a solution including a crosslinkable aromatic polymer represented by Chemical Formula 2 below into the porous polymer substrate and then performing crosslinking polymerization: 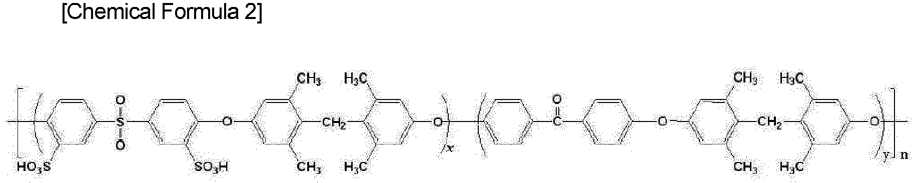 wherein x and y are greater than 0, x + y = 1, and n is an integer of 1 or more.

Also, the polymer electrolyte may be formed by incorporating a solution including a styrene-based monomer, vinylpyrrolidone, a crosslinking agent and an initiator into the porous polymer substrate and then performing crosslinking polymerization.

Furthermore, the styrene-based monomer may be one or more selected from the group consisting of alpha-methylstyrene, styrene and trifluorostyrene.

Furthermore, the crosslinking agent may be divinylbenzene, methylenebisacrylamide or tetramethylenebisacrylamide.

Furthermore, the initiator may be N,N'-azobisisobutyronitrile (AIBN), benzoyl peroxide (BPO) or cumyl peroxide.

In addition, the present invention provides a method of manufacturing the cation exchange membrane for a flow-electrode capacitive deionization device as above, including (a) impregnating a porous polymer substrate with (i) a solution including a crosslinkable aromatic polymer represented by Chemical Formula 1 below, a monomer having an aliphatic or aromatic ring with a vinyl group linked thereto, and an initiator, (ii) a solution including a crosslinkable aromatic polymer represented by Chemical Formula 2 below, or (iii) a solution including a styrene-based monomer, vinylpyrrolidone, a crosslinking agent and an initiator; and (b) applying heat or light to the porous polymer substrate impregnated with the solution as obtained in (a), thus forming a polymer electrolyte crosslinking polymerized in the porous polymer substrate: 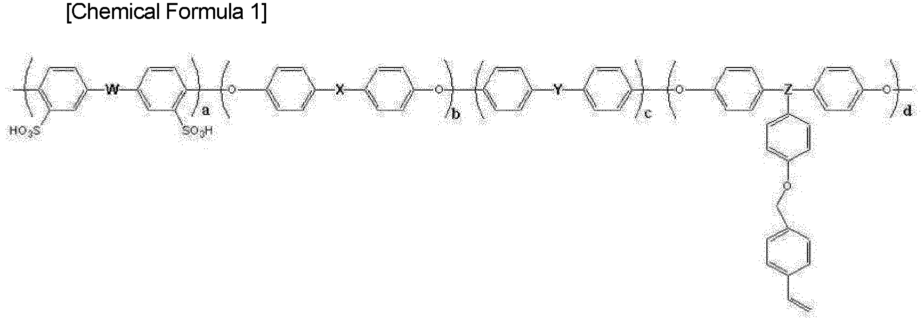 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c= b + d, 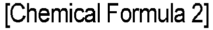 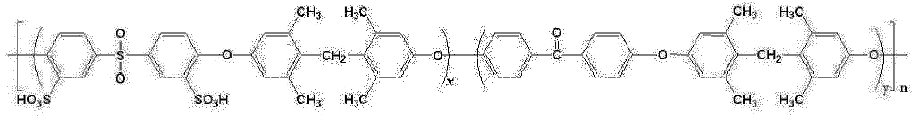 wherein x and y are greater than 0, x + y = 1, and n is an integer of 1 or more.

Also, the polymer substrate in (a) may be hydrophilized with sulfone or a surfactant.

Also, (b) may be performed under a condition in which a polyethyleneterephthalate (PET) film is formed on one side and the other side of the porous polymer substrate impregnated with the solution.

In addition, the present invention provides an anion exchange membrane for a flow-electrode capacitive deionization (FCDi) device, including a porous polymer substrate; and a polymer electrolyte incorporated into pores of the porous polymer substrate.

Also, the porous polymer substrate may be a porous hydrocarbonaceous film having a pore volume of 30 ∼ 70%, a pore size of 0.05 ∼ 0.1 µm and a thickness of 10 ∼ 55 µm.

Also, the polymer electrolyte may be formed by incorporating a solution including an electrolyte monomer of a quaternary ammonium salt having a cationic group, a crosslinking agent and an initiator into the porous polymer substrate and then performing crosslinking polymerization.

Furthermore, the electrolyte monomer of a quaternary ammonium salt having a cationic group may be (3-acrylamidopropyl)trimethylammonium chloride or (vinylbenzyl)trimethylammonium chloride.

Furthermore, the crosslinking agent may be (i) a bisacrylamide-based crosslinking agent or (ii) triazine substituted with a (meth)acryloyl group or an alkenyl group.

Moreover, the bisacrylamide-based crosslinking agent may be one or more selected from the group consisting of N,N'-ethylenebisacrylamide, N,N'-methylenebisacrylamide, N,N'-methylenebismethacrylamide and N,N'-bisacryloylpiperazine.

Moreover, the triazine substituted with a (meth)acryloyl group may be 1,3,5-triacryloylhexahydro-1,3,5-triazine.

Furthermore, the crosslinking agent may be Doracure® series available from Ciba Geigy, Irgacure® series available from Ciba Geigy, or 2-hydroxy-2-methyl-1-phenylpropan-1-one.

In addition, the present invention provides a method of manufacturing the anion exchange membrane for a flow-electrode capacitive deionization device as above, including (a) impregnating a porous polymer substrate with a solution including an electrolyte monomer of a quaternary ammonium salt having a cationic group, a crosslinking agent and an initiator; and (b) applying heat or light to the porous polymer substrate impregnated with the solution as obtained in (a), thus forming a polymer electrolyte polymerized in the porous polymer substrate.

Also, the polymer substrate in (a) may be hydrophilized with sulfone.

In addition, the present invention provides a flow-electrode capacitive deionization device, including a flow path through which an electrolyte which is fed flows; the above cation exchange membrane disposed at one side of the flow path; the above anion exchange membrane disposed at the other side of the flow path; a cathode collector located outside the cation exchange membrane with regard to the flow path; an anode collector located outside the anion exchange membrane with regard to the flow path; and flow electrodes flowing between the cation exchange membrane and the cathode collector and between the anion exchange membrane and the anode collector.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a schematic cross-sectional view illustrating a flow-electrode capacitive deionization device according to an embodiment of the present invention;
FIGS. 2A and 2B are optical camera images illustrating changes in the cation exchange membrane of Example 1 during crosslinking polymerization; and
FIG. 3 is a graph illustrating the results of test of desalination of the flow-electrode capacitive deionization single cells of Example 3 and Comparative Example.

### DESCRIPTION OF SPECIFIC EMBODIMENTS

Hereinafter, a detailed description will be given of the present invention.

According to the present invention, a cation exchange membrane for a flow-electrode capacitive deionization (FCDi) device includes a porous polymer substrate and a polymer electrolyte incorporated into pores of the porous polymer substrate.

The porous polymer substrate may be a porous hydrocarbonaceous film having a pore volume of 30 ∼ 70%, a pore size of 0.05 ∼ 0.1 µm and a thickness of 10 ∼ 55 µm, and specific examples of the material thereof may include polyethylene, polypropylene, polyimide, polyamideimide, polypropyleneoxide, polyethersulfone, polyurethane, etc.

The pores of the porous polymer substrate are impregnated with the polymer electrolyte, and the polymer electrolyte may be formed in the pores of the porous polymer substrate by incorporating a solution including a monomer, etc. into the porous polymer substrate and then performing crosslinking polymerization via thermal crosslinking or optical crosslinking.

More specifically, the cation exchange membrane for a flow-electrode capacitive deionization device according to the present invention may be manufactured using a method including (a) impregnating a porous polymer substrate with (i) a solution including a crosslinkable aromatic polymer represented by Chemical Formula 1 below, a monomer having an aliphatic or aromatic ring with a vinyl group linked thereto, and an initiator, (ii) a solution including a crosslinkable aromatic polymer represented by Chemical Formula 2 below, or (iii) a solution including a styrene-based monomer, vinylpyrrolidone, a crosslinking agent and an initiator: 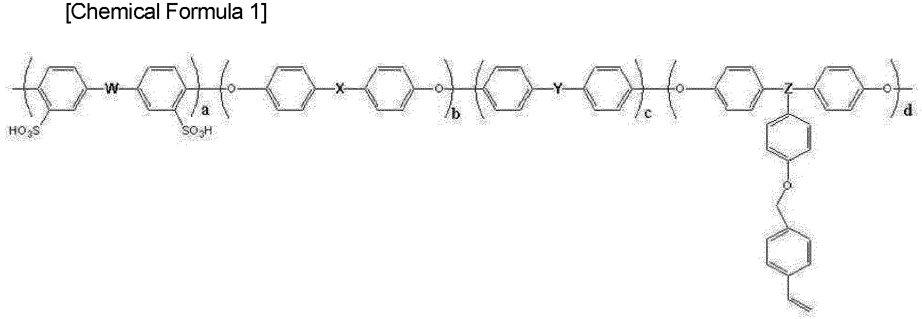 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c= b + d, 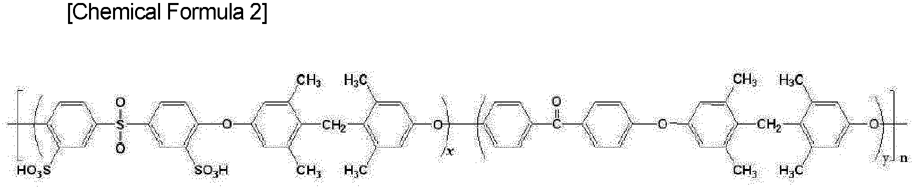 wherein x and y are greater than 0, x + y = 1, and n is an integer of 1 or more; and (b) applying heat or light to the porous polymer substrate impregnated with the solution as obtained in (a), thus forming a polymer electrolyte crosslinking polymerized in the porous polymer substrate.

In the method of manufacturing the cation exchange membrane for a flow-electrode capacitive deionization device according to the present invention, step (a) is a process of impregnating the porous polymer substrate with any one solution selected from among the solutions (i) to (iii) before crosslinking polymerization in subsequent step (b). These solutions (i) to (iii) are specified below.

The solution (i) may be obtained by dissolving a crosslinkable aromatic polymer represented by Chemical Formula 1, a monomer having an aliphatic or aromatic ring with a vinyl group linked thereto, and an initiator in a polar solvent. Specific examples of the monomer having an aliphatic or aromatic ring with a vinyl group linked thereto may include a vinylpyrrolidone monomer, a styrene monomer, a divinylbenzene monomer, etc., and specific examples of the polar solvent may include dimethylacetamide, nitromethylpyrrolidone, dimethylsulfoxide, etc.

The solution (ii) may be obtained by dissolving a crosslinkable aromatic polymer represented by Chemical Formula 2 in a polar solvent, and specific examples of the polar solvent may include dimethylacetamide, nitromethylpyrrolidone, dimethylsulfoxide, dimethylfluoride, etc.

The solution (iii) is a solution including a styrene-based monomer, vinylpyrrolidone, a crosslinking agent and an initiator. This solution may include 60 ∼ 90 wt% of the styrene-based monomer, 5 ∼ 20 wt% of vinylpyrrolidone and 5 ∼ 20 wt% of the crosslinking agent, and based on 100 parts by weight of the styrene-based monomer, the initiator may be used in an amount of 0.2 ∼ 1 parts by weight. As such, if the amount of vinylpyrrolidone is less than 5 wt%, it is lacking in ensuring water content able to improve ion conductivity. In contrast, if the amount thereof exceeds 20 wt%, ion exchange capacity of the membrane may decrease. Also, if the amount of the crosslinking agent is less than 5 wt%, crosslinkability becomes poor. In contrast, if the amount thereof exceeds 20 wt%, crosslinkability may become too high, undesirably decreasing conductivity of the membrane.

The kind of styrene-based monomer is not particularly limited, but preferably includes one or more selected from among alpha-methylstyrene, styrene and trifluorostyrene. Also, the kind of crosslinking agent is not particularly limited, but preferably includes any one selected from among divinylbenzene, methylenebisacrylamide, and tetramethylenebisacrylamide. Also, the kind of initiator is not particularly limited, but preferably includes any one selected from among N,N'-azobisisobutyronitrile (AIBN), benzoyl peroxide (BPO) and cumyl peroxide.

Meanwhile, the surface and the inner pores of the polymer substrate provided in step (a) may be subjected to hydrophilization treatment, before impregnation with any one selected from among the solutions (i) to (iii), in order to increase the filling factor of the solution into the pores or promote crosslinking polymerization in subsequent step (b).

As such, the specific method for hydrophilization treatment is not particularly limited, and may include, for example, hydrophilization with sulfone or a surfactant.

In the case of hydrophilization with sulfone, hydrophilization pretreatment may be carried out in such a manner that the porous polymer substrate is immersed in a solution comprising 98% or more sulfuric acid and 96% or more chlorosulfuric acid mixed at a weight ratio of 1:1 ∼ 3:1 and thus allowed to react at 30 ∼ 60°C for 2 ∼ 5 hr, and preferably 45 ∼ 50°C for 3 ∼ 4 hr, followed by cleaning for one day or longer using a 1 ∼ 3N sodium hydroxide solution.

On the other hand, in the case of hydrophilization with a surfactant, the porous polymer substrate may be immersed in a surfactant solution, and thus the surface of the pores thereof may be hydrophilized. As such, any surfactant may be used without particular limitation so long as the porous polymer substrate is hydrophilized therewith. Preferably useful is a non-ionic surfactant.

In the method of manufacturing the cation exchange membrane for a flow-electrode capacitive deionization device according to the present invention, step (b) is a process of applying heat or light to the porous polymer substrate impregnated with the solution as obtained in step (a) to perform thermal crosslinking or optical crosslinking, thus forming the polymer electrolyte crosslinking polymerized in the porous polymer substrate. Taking into consideration the composition of the solutions (i) to (iii) specified above, crosslinkability, thermal stability of the substrate, etc., thermal crosslinking or optical crosslinking may be conducted under appropriate crosslinking conditions (temperature for thermal polymerization, light irradiation energy for optical crosslinking, crosslinking polymerization atmosphere, etc.).

Also, this step may be carried out under a condition in which a polymer film such as a polyethyleneterephthalate (PET) film is formed on one side and the other side of the porous polymer substrate impregnated with the above solution. In this case, after completion of the present step, the polymer film is removed from the porous polymer substrate.

In addition, below is a description of an anion exchange membrane for a flow-electrode capacitive deionization (FCDi) device according to the present invention.

The anion exchange membrane for a flow-electrode capacitive deionization (FCDi) device according to the present invention may include a porous polymer substrate and a polymer electrolyte incorporated into the pores of the porous polymer substrate.

The porous polymer substrate is a porous hydrocarbonaceous film having a pore volume of 30 ∼ 70%, a pore size of 0.05 ∼ 0.1 *µ*m and a thickness of 10 ∼ 55 *µ*m, and specific examples of the material thereof may include polyethylene, polypropylene, polyimide, polyamideimide, polypropyleneoxide, polyethersulfone, polyurethane, etc.

The pores of the porous polymer substrate are impregnated with the polymer electrolyte, and the polymer electrolyte may be formed in the pores of the porous polymer substrate by incorporating the solution including a monomer, etc. into the porous polymer substrate and then performing crosslinking polymerization via thermal crosslinking or optical crosslinking.

More specifically, the anion exchange membrane for a flow-electrode capacitive deionization (FCDi) device according to the present invention may be manufactured using a method including (a) impregnating a porous polymer substrate with a solution including an electrolyte monomer of a quaternary ammonium salt having a cationic group, a crosslinking agent and an initiator; and (b) applying heat or light to the porous polymer substrate impregnated with the solution as obtained in (a), thus forming a polymer electrolyte crosslinking polymerized in the porous polymer substrate.

In the method of manufacturing the anion exchange membrane for a flow-electrode capacitive deionization device according to the present invention, step (a) is a process of impregnating the porous polymer substrate with the solution including the electrolyte monomer of a quaternary ammonium salt having a cationic group, the crosslinking agent and the initiator, before crosslinking polymerization in subsequent step (b).

As for the solution, specific examples of the electrolyte monomer of a quaternary ammonium salt having a cationic group may include, but are not limited to, (3-acrylamidopropyl)trimethylammonium chloride, (vinylbenzyl)trimethylammonium chloride, etc.

The crosslinking agent is preferably a bisacrylamide-based crosslinking agent or triazine substituted with a (meth)acryloyl group or an alkenyl group. In the case where the bisacrylamide-based crosslinking agent is used, it may include, but is not limited to, one or more selected from among N,N'-ethylenebisacrylamide, N,N'-methylenebisacrylamide, N,N'-methylenebismethacrylamide and N,N'-bisacryloylpiperazine. Useful as the triazine substituted with a (meth)acryloyl group is 1,3,5-triacryloylhexahydro-1,3,5-triazine.

The initiator may include, but is not limited to, a photoinitiator, such as any one selected from among Doracure® and Irgacure® series available from Ciba Geigy, Switzerland, or 2-hydroxy-2-methyl-1-phenylpropan-1-one.

The solvent used to form the solution may include any known solvent typically used in the art, and may include, for example, water or a solvent mixture of water and a polar solvent (dimethylformamide, dimethylacetamide, nitromethylpyrrolidone, dimethylsulfoxide, dimethylfluoride, etc.).

Also, the solution may have a composition of (i) 100 parts by weight of an initiator-free solution comprising 48 ∼ 86 parts by weight of the electrolyte monomer of a quaternary ammonium salt, 2 ∼ 4 parts by weight of the bisacrylamide-based crosslinking agent and 10 ∼ 50 parts by weight of the solvent, and 0.1 ∼ 0.5 parts by weight of the initiator, or of (ii) 100 parts by weight of an initiator-free solution comprising 60 ∼ 75 parts by weight of the electrolyte monomer of a quaternary ammonium salt, 5 ∼ 16 parts by weight of triazine substituted with a (meth)acryloyl group and 20 ∼ 25 parts by weight of the solvent, and 0.5 ∼ 2 parts by weight of the initiator.

The surface and the inner pores of the polymer substrate provided in step (a) may be subjected to hydrophilization treatment, before impregnation with the above solution, in order to increase the filling factor of the solution into the pores or promote crosslinking polymerization in subsequent step (b).

As such, the specific method for hydrophilization treatment is not particularly limited, and may include, for example, hydrophilization with sulfone.

In the case of hydrophilization with sulfone, hydrophilization pretreatment may be performed in such a manner that the porous polymer substrate is immersed in a solution comprising 98% or more sulfuric acid and 96% or more chlorosulfuric acid mixed at a weight ratio of 1:1 ∼ 3:1 and thus allowed to react at 30 ∼ 60°C for 2 ∼ 5 hr, and preferably 45 ∼ 50°C for 3 ∼ 4 hr, followed by cleaning for one day or longer using a 1 ∼ 3N sodium hydroxide solution.

In the method of manufacturing the anion exchange membrane for a flow-electrode capacitive deionization device according to the present invention, step (b) is a process of applying heat or light to the porous polymer substrate impregnated with the solution as obtained in step (a) to perform thermal crosslinking or optical crosslinking, thus forming the polymer electrolyte crosslinking polymerized in the porous polymer substrate. In consideration of the composition of the solution specified above, crosslinkability, thermal stability of the substrate, etc., thermal crosslinking or optical crosslinking may be performed under appropriate crosslinking conditions (temperature for thermal polymerization, light irradiation energy for optical crosslinking, crosslinking polymerization atmosphere, etc.).

Furthermore, this step may be carried out under a condition in which a polymer film such as a PET film is formed on one side and the other side of the porous polymer substrate impregnated with the solution. In this case, after completion of the present step, the polymer film is removed from the porous polymer substrate.

Below is a description of a flow-electrode capacitive deionization device including the cation exchange membrane and the anion exchange membrane specified as above.

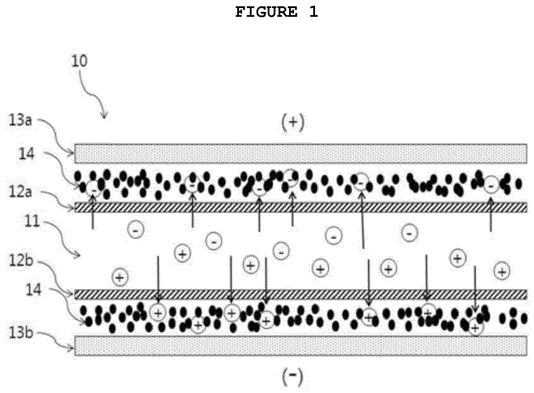

FIG. 1 schematically illustrates a flow-electrode capacitive deionization device according to an embodiment of the present invention. As illustrated in FIG. 1, the flow-electrode capacitive deionization device 10 includes a flow path 11 through which an electrolyte that is fed flows; an anion exchange membrane 12a disposed at one side of the flow path; a cation exchange membrane 12b disposed at the other side of the flow path; an anode collector 13a located outside the anion exchange membrane with regard to the flow path; a cathode collector 13b located outside the cation exchange membrane with regard to the flow path; and flow electrodes 14 flowing between the cation exchange membrane and the cathode collector and between the anion exchange membrane and the anode collector.

The flow path 11 is a passage through which feed water to be desalinated, such as wastewater, sea water, etc., flows by being fed from the outside of the flow-electrode capacitive deionization device 10 according to the present invention.

Also, the anion exchange membrane 12a and the cation exchange membrane 12b enable ions in the feed water to selectively pass therethrough and simultaneously prevent co-ions from being discharged into the feed water, and preferably may include the cation exchange membrane or the anion exchange membrane for a flow-electrode capacitive deionization device according to the present invention as mentioned above.

The anode collector 13a and the cathode collector 13b are electrically connected to a power source provided outside the flow-electrode capacitive deionization device 10 according to the present invention so as to apply voltage to the flow electrodes 14, and the material thereof may include a graphite plate, a graphite sheet, or at least one metal selected from among Cu, Al, Ni, Fe, Co and Ti, a metal mixture or alloy.

The flow electrodes 14, which flow between the cation exchange membrane and the cathode collector and between the anion exchange membrane and the anode collector, enable ions fed through the ion exchange membranes from the feed water to be adsorbed and removed by electrostatic attraction while flowing through flow paths between the ion exchange membranes and the collectors. Such flow electrodes may be provided in a state of slurry comprising an electrode active material and an electrolyte, which are mixed together. The electrode active material may be one or more selected from among activated carbon, aerogel, carbon nanotubes (CNT), mesoporous carbon, activated carbon fibers, graphite oxide and metal oxide, and the electrolyte may include an aqueous electrolyte such as NaCl, H₂SO₄, HCI, NaOH, KOH, Na₂NO₃, etc., and an organic electrolyte such as propylene carbonate (PC), diethyl carbonate (DEC), or tetrahydrofuran (THF).

The flow-electrode capacitive deionization device 10 according to the present invention may further include, in addition to the above-mentioned members, a spacer for forming the flow path 11 or a spacer for forming each flow path to allow the flow electrodes to flow between the ion exchange membranes 12a, 12b and the collectors 13a, 13b, as necessary. Herein, the spacer is preferably made of a material having ion permeability and electrical insulation properties.

A better understanding of the present invention may be obtained through the following examples which are set forth to illustrate, but are not to be construed as limiting the present invention, and do not fall under the scope of the present claims.

### <Example 1> Formation of cation exchange membrane for flow-electrode capacitive deionization device

95% or more high-concentration anhydrous vinylsulfonic acid and N,N'-ethylenebisacrylamide were mixed at a ratio of 80:20 by parts by weight and stirred, thus preparing a mixed solution, and as an initiator, Darocure® 1173 diluted in 10 parts by weight in methanol was added in an amount of 1 part by weight based on 100 parts by weight of the mixed solution.

Subsequently, the resulting solution was incorporated into a polyethylene porous support having a film thickness of 25 µm, a pore size of 0.07 µm and a pore distribution of 45% in which the surface of pores thereof had been subjected to hydrophilization by immersing the support for 1 ∼ 2 min in a solution of a commercially available surfactant (dodecylbenzenesulfonic acid, DBSA) diluted in 0.5 ∼ 1 parts by weight in water and then drying it. Thereby, the inside of the support was sufficiently impregnated with the monomer solution, after which the support was placed between PET films, and irradiated with UV at a dose of 150 mJ/cm².

After the crosslinking process as above, the PET films were removed, impurities were removed from the surface of the obtained composite membrane so that the surface was made uniform, and the membrane was washed several times with ultrapure water, finally manufacturing a cation exchange membrane for a flow-electrode capacitive deionization device.

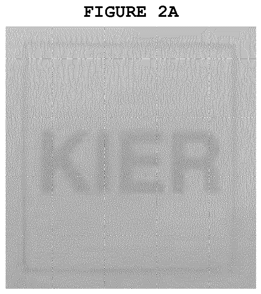

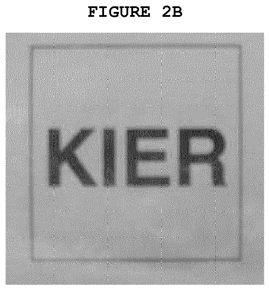

For reference, FIG. 2A illustrates the outer appearance of the porous polymer substrate before crosslinking polymerization in the present example, and FIG. 2B illustrates the outer appearance of the final cation exchange membrane after crosslinking polymerization through the present example. From this, it can be seen that the transparent cation exchange membrane was obtained via crosslinking polymerization.

### <Example 2> Formation of anion exchange membrane for flow-electrode capacitive deionization device

(Vinylbenzyl)trimethylammonium chloride, 1,3,5-triacryloylhexahydro-1,3,5-triazine, and a solvent mixture of deionized water and dimethylformamide at a weight ratio of 1:1 were mixed at a weight ratio of 61.5:15.4:23.1 with stirring, thus preparing a mixed solution, and 1 part by weight of 2-hydroxy-2-methyl-1-phenyl-1-one diluted in 10 wt% in methanol as a photoinitiator was mixed based on 100 parts by weight of the mixed solution.

Subsequently, the resulting solution was incorporated into a polyolefin-based porous support having a film thickness of 25 µm, an average pore size of 0.07 µm and a pore distribution of 45%, so that the support was sufficiently impregnated with the monomer solution. Subsequently, the resulting membrane impregnated with the electrolyte was placed between PET films and then irradiated with UV at a dose of 30 ∼ 150 mJ/cm².

After the crosslinking process as above, the PET films were removed, impurities were removed from the surface of the obtained composite membrane so that the surface was made uniform, and the composite membrane was washed several times with ultrapure water, giving a polymer composite membrane. Then, this membrane was placed in a 2N sodium hydroxide solution so that Cl- ions were substituted with OH- ions to sufficiently ensure hydroxide ion conductivity, finally manufacturing an anion exchange membrane for a flow-electrode capacitive deionization device.

### <Example 3> Formation of flow-electrode capacitive deionization single cells including the ion exchange membranes of Examples 1 and 2

Between rectangular anode and cathode collectors (Graphite, 94 mm × 56 mm, effective area 12 cm²) with a microchannel structure, the anion exchange membrane of Example 2 and the cation exchange membrane of Example 1 were spaced apart from each other by a spacer, thus manufacturing a flow-electrode capacitive deionization cell. Furthermore, as flow electrodes for use in the deionization cell, activated carbon (average pore diameter 21 Å, total pore volume 1.71 cc/g) having a specific surface area of about 3,263 m²/g was mixed with 0.1M NaCl aqueous solution and the resulting mixture was finely dispersed using a nanodisperser (ISA-N-10, Ilshin Autoclave, Korea), thus manufacturing flow electrodes composed of activated carbon having an average diameter of 8 µm in distilled water.

### <Comparative Example> Formation of flow-electrode capacitive deionization single cell including commercial ion exchange membranes

A flow-electrode capacitive deionization single cell was manufactured in the same manner as in Example 3, with the exception that as the cation exchange membrane, a commercial cation exchange membrane under brand name of ASTOM Neosepta® CMX, and as the anion exchange membrane, a commercial anion exchange membrane under brand name of ASTOM Neosepta® AMX were used.

### <Test Example> Measurement of desalination efficiency of the flow-electrode capacitive deionization single cells of Example 3 and Comparative Example

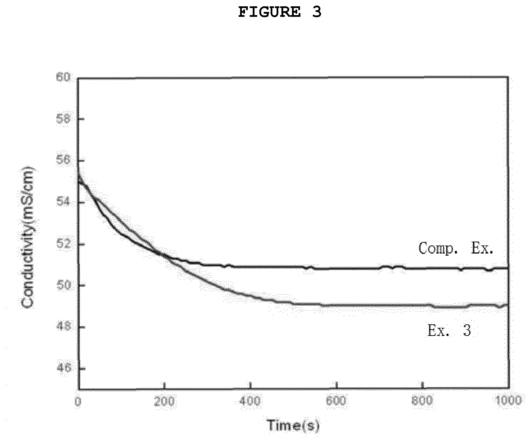

As for each of the flow-electrode capacitive deionization single cells of Example 3 and Comparative Example, while flow electrodes were passed through the anode flow path and the cathode flow path at a flow rate of 25 mL/min, an NaCl electrolyte having a concentration of 35 g/L was passed through the electrolyte flow path of the flow-electrode capacitive deionization single cell at a flow rate of 3 mL/min using a micro-metering pump (Nippon Fine Chemical Co. Ltd., Minichemi pump). Simultaneously, the external terminal of each flow-electrode capacitive deionization single cell was connected to a potentiostat (Ivium Technologies B.V., Netherlands), and thus a voltage of 1.2 V was applied so that a desalination test was carried out. After the desalination test, the concentration of the discharged NaCl electrolyte was measured at intervals of 18 sec using a conductivity meter (S47, Mettler-Toledo, Switzerland). A graph for changes in concentration depending on the desalination time is depicted in FIG. 3.

As illustrated in FIG. 3, in the case of the flow-electrode capacitive deionization single cell of Comparative Example, the desalination efficiency was 10.0% at an elapse time of 1000 sec, whereas the flow-electrode capacitive deionization single cell of Example 3 exhibited a desalination efficiency of 12.5% at an elapse time of 1000 sec, which is evaluated to be increased by 25% compared to that of Comparative Example.

As is apparent from these results, in the case where the cation exchange membrane and the anion exchange membrane according to Examples 1 and 2 are applied to a flow-electrode capacitive deionization device, they have high ion conductivity and thus ions of feed water may be more rapidly transferred into the pores of the electrode active material of flow electrodes, thereby remarkably improving desalination efficiency.

As described hereinbefore, the present invention provides an ion exchange membrane for a flow-electrode capacitive deionization device and a flow-electrode capacitive deionization device including the same. According to the present invention, a cation exchange membrane and an anion exchange membrane for a flow-electrode capacitive deionization device have superior ion conductivity and thus enable ions of feed water such as brackish water to be more rapidly transferred into the pores of the electrode active material of flow electrodes. Thereby, the desalination efficiency of the flow-electrode capacitive deionization device can be drastically increased, compared to when using conventional commercial ion exchange membranes. Furthermore, such ion exchange membranes have high water resistance and heat resistance, making it possible to stably operate the flow-electrode capacitive deionization device.

## Claims

1. A flow-electrode capacitive deionization device, comprising:
a flow path through which an electrolyte which is fed flows;
a cation exchange membrane disposed at one side of the flow path;
an anion exchange membrane disposed at the other side of the flow path;
a cathode collector located outside the cation exchange membrane with regard to the flow path;
an anode collector located outside the anion exchange membrane with regard to the flow path; and
flow electrodes flowing between the cation exchange membrane and the cathode collector and between the anion exchange membrane and the anode collector, wherein
the cation and anion exchange membranes comprise a porous polymer substrate and a polymer electrolyte incorporated into pores of the porous polymer substrate, wherein the polymer electrolyte in the cation exchange membrane is formed by incorporating
(i) a solution including a crosslinkable aromatic polymer represented by Chemical Formula 1 below, a monomer having an aliphatic or aromatic ring with a vinyl group linked thereto preferably selected from a vinylpyrrolidone monomer, a styrene monomer or a divinylbenzene monomer, and an initiator into the porous polymer substrate and then performing crosslinking polymerization: 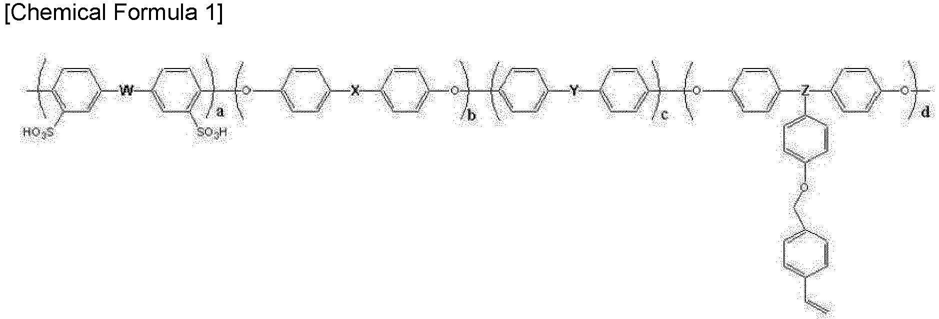 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c = b + d, or
(ii) a solution including a crosslinkable aromatic polymer represented by Chemical Formula 2 below into the porous polymer substrate and then performing crosslinking polymerization: 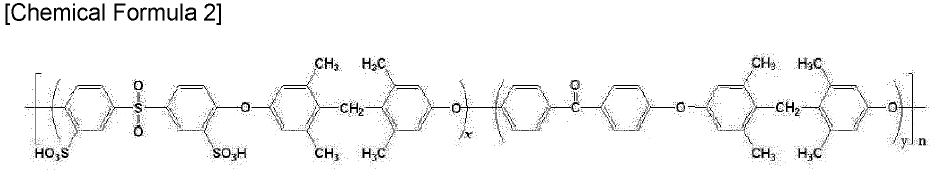 wherein x and y are greater than 0, x + y = 1, and n is an integer of 1 or more, or
(iii) a solution including a styrene-based monomer preferably selected from one or more from the group consisting of alpha-methylstyrene, styrene and trifluorostyrene, vinylpyrrolidone, a crosslinking agent preferably selected from divinylbenzene, methylenebisacrylamide or tetramethylenebisacrylamide and an initiator preferably selected from N,N'-azobisisobutyronitrile (AIBN), benzoyl peroxide (BPO) or cumyl peroxide, into the porous polymer substrate and then performing crosslinking polymerization.

2. A cation exchange membrane for a flow-electrode capacitive deionization (FCDi) device, comprising:
a porous polymer substrate; and
a polymer electrolyte incorporated into pores of the porous polymer substrate, wherein the polymer electrolyte is formed by incorporating a solution including a crosslinkable aromatic polymer represented by Chemical Formula 1 below, a monomer having an aliphatic or aromatic ring with a vinyl group linked thereto preferably selected from a vinylpyrrolidone monomer, a styrene monomer or a divinylbenzene monomer, and an initiator into the porous polymer substrate and then performing crosslinking polymerization: 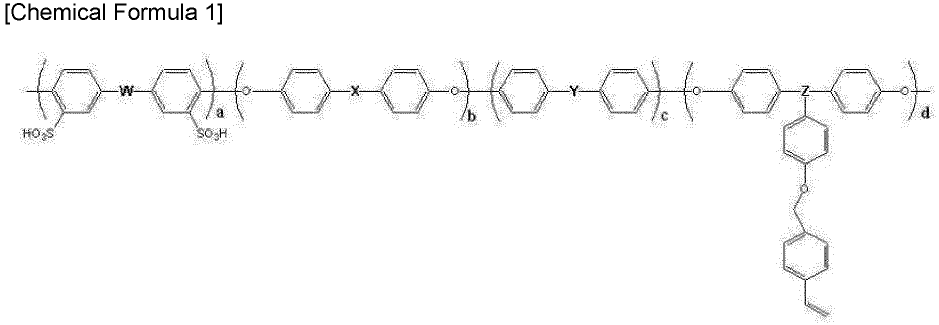 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c = b + d.

3. A cation exchange membrane for a flow-electrode capacitive deionization (FCDi) device, comprising:
a porous polymer substrate; and
a polymer electrolyte incorporated into pores of the porous polymer substrate, wherein the polymer electrolyte is formed by incorporating a solution including a crosslinkable aromatic polymer represented by Chemical Formula 2 below into the porous polymer substrate and then performing crosslinking polymerization: 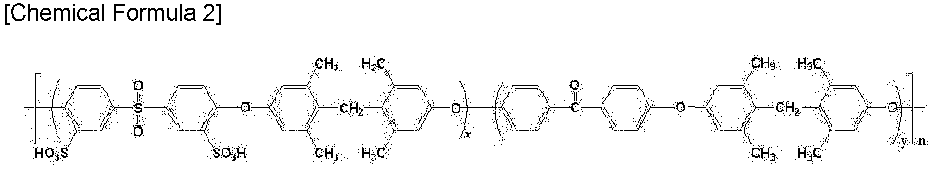 wherein x and y are greater than 0, x + y = 1, and n is an integer of 1 or more.

4. A cation exchange membrane for a flow-electrode capacitive deionization (FCDi) device, comprising:
a porous polymer substrate; and
a polymer electrolyte incorporated into pores of the porous polymer substrate, wherein the polymer electrolyte is formed by incorporating a solution including a styrene-based monomer preferably selected from one or more from the group consisting of alpha-methylstyrene, styrene and trifluorostyrene, vinylpyrrolidone, a crosslinking agent preferably selected from divinylbenzene, methylenebisacrylamide or tetramethylenebisacrylamide and an initiator preferably selected from N,N'-azobisisobutyronitrile (AIBN), benzoyl peroxide (BPO) or cumyl peroxide, into the porous polymer substrate and then performing crosslinking polymerization.

5. A method of manufacturing the cation exchange membrane according to any one of claims 2-4for a flow-electrode capacitive deionization device, comprising:
(a) impregnating a porous polymer substrate with (i) a solution including a crosslinkable aromatic polymer represented by Chemical Formula 1 below, a monomer having an aliphatic or aromatic ring with a vinyl group linked thereto, and an initiator, (ii) a solution including a crosslinkable aromatic polymer represented by Chemical Formula 2 below, or (iii) a solution including a styrene-based monomer, vinylpyrrolidone, a crosslinking agent and an initiator; and
(b) applying heat or light to the porous polymer substrate impregnated with the solution as obtained in (a), thus forming a polymer electrolyte crosslinking polymerized in the porous polymer substrate: 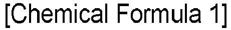 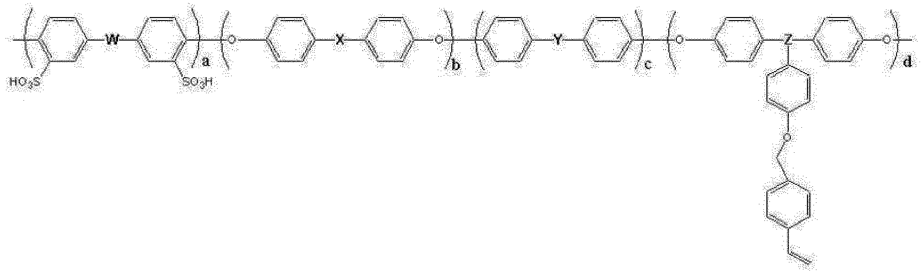 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c = b + d, 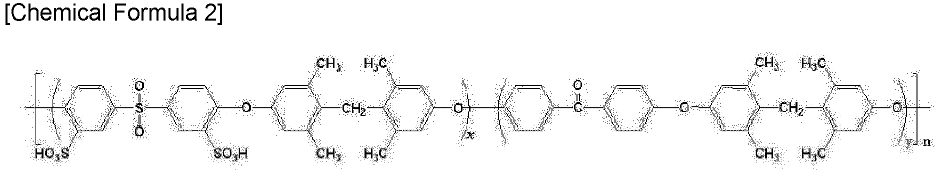 wherein x and y are greater than 0, x + y = 1, and n is an integer of 1 or more, .
wherein (b) is performed under a condition in which a polyethyleneterephthalate (PET) film is formed on one side and the other side of the porous polymer substrate impregnated with the solution.

## Patentansprüche

1. Eine kapazitive Durchflusselektroden-Deionisierungsvorrichtung, umfassend:
einen Strömungspfad, durch den ein zugeführtes Elektrolyt fließt;
eine Kationenaustauschmembran, die an einer Seite des Strömungspfades angeordnet ist;
eine Anionenaustauschmembran, die auf der anderen Seite des Strömungspfades angeordnet ist;
einen Kathodenkollektor, der in Bezug auf den Strömungspfad außerhalb der Kationenaustauschmembran angeordnet ist;
einen Anodenkollektor, der in Bezug auf den Strömungspfad außerhalb der Anionenaustauschmembran angeordnet ist; und
Durchflusselektroden, die zwischen der Kationenaustauschmembran und dem Kathodenkollektor und zwischen der Anionenaustauschmembran und dem Anodenkollektor fließen, wobei die Kationen- und Anionenaustauschmembranen ein poröses Polymersubstrat und ein Polymerelektrolyt umfassen, das in die Poren des porösen Polymersubstrats eingebaut ist, wobei das Polymerelektrolyt in der Kationenaustauschmembran gebildet wird, indem
(i) eine Lösung, die ein vernetzbares aromatisches Polymer, dargestellt durch die nachstehende chemische Formel 1, ein Monomer mit einem aliphatischen oder aromatischen Ring mit einer daran gebundenen Vinylgruppe, vorzugsweise ausgewählt aus einem Vinylpyrrolidon-Monomer, einem Styrol-Monomer oder einem Divinylbenzol-Monomer, und einen Initiator enthält, in das poröse Polymersubstrat eingearbeitet wird und dann eine vernetzende Polymerisation durchgeführt wird: 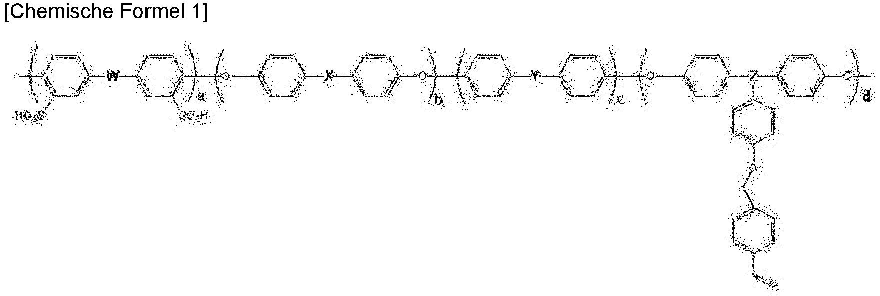 wobei W, X und Y jeweils unabhängig voneinander eines oder mehrere ausgewählt aus SO₂, CO₂, CH₃-CH₂-CH₃, CF₃-CF₂-CF₃ und S sind, Z eines ausgewählt aus C-CH₃, C-CF₃ und C-H ist, und a + c = b + d, oder
(ii) eine Lösung, die ein vernetzbares aromatisches Polymer, dargestellt durch die chemische Formel 2, enthält, in das poröse Polymersubstrat eingearbeitet wird und dann eine vernetzende Polymerisation durchgeführt wird: 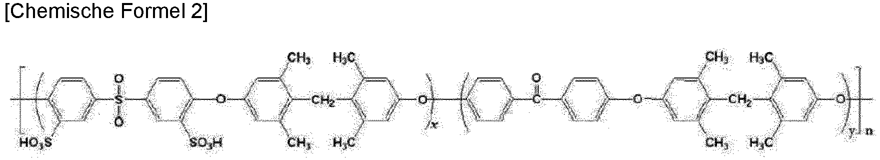 wobei x und y größer als 0 sind, x + y = 1, und n eine ganze Zahl von 1 oder mehr ist, oder
(iii) eine Lösung, die ein Monomer auf Styrolbasis, vorzugsweise ausgewählt aus einem oder mehreren aus der Gruppe bestehend aus alpha-Methylstyrol, Styrol und Trifluorstyrol, Vinylpyrrolidon, ein Vernetzungsmittel, vorzugsweise ausgewählt aus Divinylbenzol, Methylenbisacrylamid oder Tetramethylenbisacrylamid, und einen Initiator, vorzugsweise ausgewählt aus N,N'-Azobisisobutyronitril (AIBN), Benzoylperoxid (BPO) oder Cumylperoxid, enthält, in das poröse Polymersubstrat eingearbeitet wird und dann eine vernetzende Polymerisation durchgeführt wird.

2. Eine Kationenaustauschmembran für eine kapazitive Durchflusselektroden-Deionisierungsvorrichtung (FCDi; Flow-Electrode Capacitive Deionization), umfassend
ein poröses Polymersubstrat, und
ein Polymerelektrolyt, das in Poren des porösen Polymersubstrats eingearbeitet ist, wobei das Polymerelektrolyt gebildet wird, indem eine Lösung, die ein vernetzbares aromatisches Polymer, dargestellt durch die nachstehende chemische Formel 1, ein Monomer mit einem aliphatischen oder aromatischen Ring mit einer daran gebundenen Vinylgruppe, vorzugsweise ausgewählt aus einem Vinylpyrrolidon-Monomer, einem Styrol-Monomer oder einem Divinylbenzol-Monomer, und einen Initiator enthält, in das poröse Polymersubstrat eingearbeitet wird und dann eine Vernetzungspolymerisation durchgeführt wird: 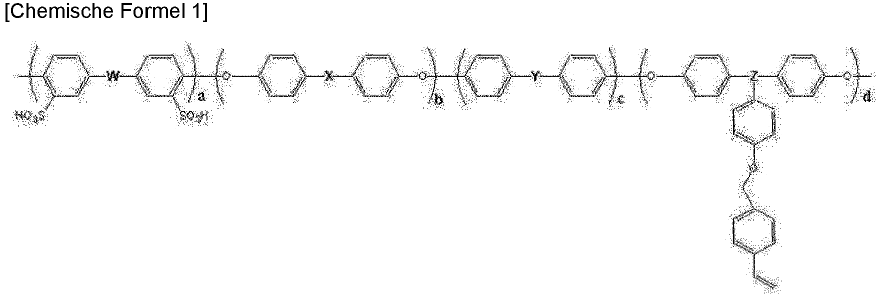 wobei W, X und Y jeweils unabhängig voneinander eines oder mehrere ausgewählt aus SO₂, CO₂, CH₃-CH₂-CH₃, CF₃-CF₂-CF₃ und S sind, Z eines ausgewählt aus C-CH₃, C-CF₃ und C-H ist, und a + c = b + d.

3. Eine Kationenaustauschmembran für eine kapazitive Durchflusselektroden-Deionisierungsvorrichtung (FCDi; Flow-Electrode Capacitive Deionization), umfassend ein poröses Polymersubstrat, und
ein Polymerelektrolyt, das in Poren des porösen Polymersubstrats eingearbeitet ist, wobei das Polymerelektrolyt gebildet wird, indem eine Lösung, die ein vernetzbares aromatisches Polymer enthält, dargestellt durch die nachstehende chemische Formel 2, in das poröse Polymersubstrat eingearbeitet wird und dann eine vernetzende Polymerisation durchgeführt wird: 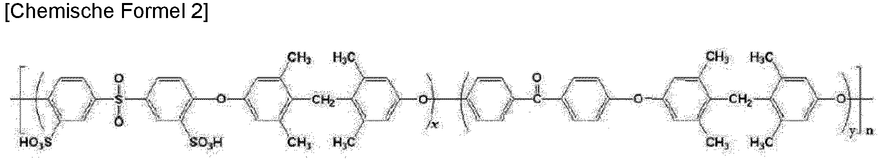 wobei x und y größer als 0 sind, x + y = 1, und n eine ganze Zahl von 1 oder mehr ist.

4. Eine Kationenaustauschmembran für eine kapazitive Durchflusselektroden-Deionisierungsvorrichtung (FCDi; Flow-Electrode Capacitive Deionization), umfassend
ein poröses Polymersubstrat, und
ein Polymerelektrolyt, das in Poren des porösen Polymersubstrats eingearbeitet ist, wobei das Polymerelektrolyt gebildet wird, indem eine Lösung, die ein Monomer auf Styrolbasis, vorzugsweise ausgewählt aus einem oder mehreren aus der Gruppe bestehend aus alpha-Methylstyrol, Styrol und Trifluorstyrol, Vinylpyrrolidon, ein Vernetzungsmittel, vorzugsweise ausgewählt aus Divinylbenzol, Methylenbisacrylamid oder Tetramethylenbisacrylamid, und einen Initiator, vorzugsweise ausgewählt aus N,N'-Azobisisobutyronitril (AIBN), Benzoylperoxid (BPO) oder Cumylperoxid, enthält, in das poröse Polymersubstrat eingearbeitet wird und dann eine vernetzende Polymerisation durchgeführt wird.

5. Verfahren zur Herstellung der Kationenaustauschmembran nach einem der Ansprüche 2-4 für eine kapazitive Durchflusselektroden-Deionisierungsvorrichtung, umfassend:
(a) Imprägnieren eines porösen Polymersubstrats mit (i) einer Lösung, die ein vernetzbares aromatisches Polymer, dargestellt durch die nachstehende chemische Formel 1, ein Monomer mit einem aliphatischen oder aromatischen Ring mit einer daran gebundenen Vinylgruppe und einen Initiator enthält, (ii) einer Lösung, die ein vernetzbares aromatisches Polymer, dargestellt durch die nachstehende chemische Formel 2, enthält, oder (iii) einer Lösung, die ein Monomer auf Styrolbasis, Vinylpyrrolidon, ein Vernetzungsmittel und einen Initiator enthält, und
(b) Anwenden von Wärme oder Licht auf das mit der Lösung imprägnierte poröse Polymersubstrat, wie unter (a) erhalten, wodurch ein Polymerelektrolyt gebildet wird, das in dem porösen Polymersubstrat vernetzt und polymerisiert wird: 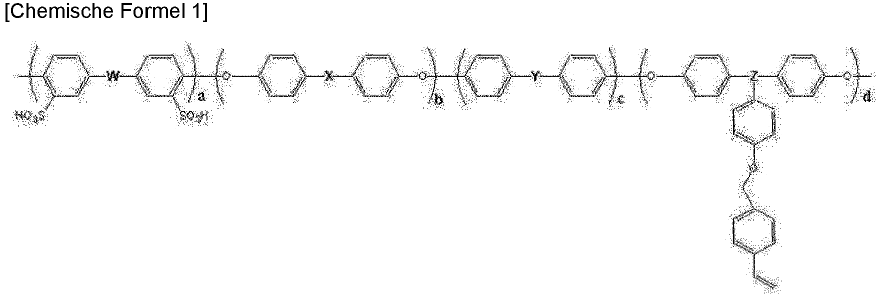 wobei W, X und Y jeweils unabhängig voneinander eines oder mehrere ausgewählt aus SO₂, CO₂, CH₃-CH₂-CH₃, CF₃-CF₂-CF₃ und S sind, Z eines ausgewählt aus C-CH₃, C-CF₃ und C-H ist, und a + c = b + d, 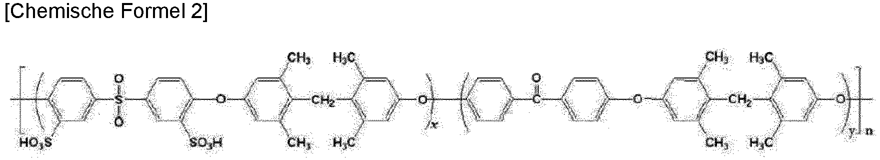 wobei x und y größer als 0 sind, x + y = 1, und n eine ganze Zahl von 1 oder mehr ist,
wobei (b) unter einer Bedingung durchgeführt wird, bei der ein Polyethylenterephthalat (PET)-Film auf einer Seite und der anderen Seite des porösen Polymersubstrats, das mit der Lösung imprägniert ist, gebildet wird.

## Revendications

1. Dispositif de déionisation capacitive à électrode d'écoulement, comprenant:
un trajet d'écoulement à travers lequel s'écoule un électrolyte qui est alimenté;
une membrane échangeuse de cations disposée sur un côté du trajet d'écoulement;
une membrane échangeuse d'anions disposée de l'autre côté du trajet d'écoulement;
un collecteur de cathode situé à l'extérieur de la membrane échangeuse de cations par rapport au trajet d'écoulement;
un collecteur d'anode situé à l'extérieur de la membrane échangeuse d'anions par rapport au trajet d'écoulement; et
des électrodes d'écoulement s'écoulant entre la membrane échangeuse de cations et le collecteur de cathode et entre la membrane échangeuse d'anions et le collecteur d'anode dans lequel les membranes échangeuses de cations et d'anions comprennent un substrat polymère poreux et un électrolyte polymère incorporé dans des pores du substrat polymère poreux, dans lequel le polymère électrolyte dans la membrane échangeuse de cations est formé en incorporant
(i) une solution comprenant un polymère aromatique réticulable représenté par la Formule Chimique 1 ci-dessous, un monomère ayant un cycle aliphatique ou aromatique avec un groupe vinyle lié à celui-ci de préférence choisi parmi un monomère de vinylpyrrolidone, un monomère de styrène ou un monomère de divinylbenzène, et un initiateur, dans le substrat polymère poreux et ensuite effectuer une polymérisation par réticulation: 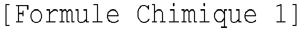 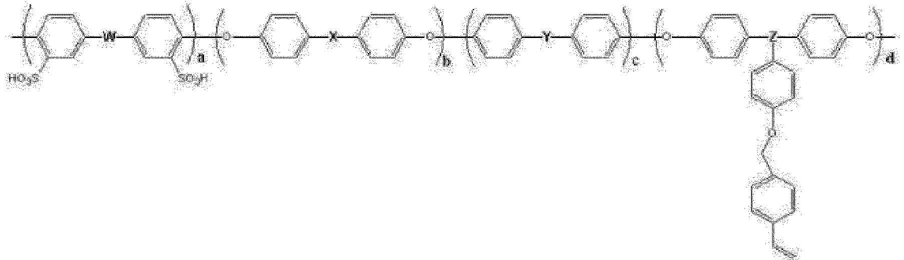 où W, X et Y sont chacun indépendamment un ou plusieurs choisis parmi SO₂, CO₂, CH₃-CH₂-CH₃, CF₃-CF₂-CF₃ et S, Z est l'un quelconque choisi parmi C-CH₃, C-CF₃, et C-H, et a + c = b + d, ou
(ii) une solution comprenant un polymère aromatique réticulable représenté par la Formule Chimique 2 ci-dessous dans le substrat polymère poreux et puis effectuer une polymérisation par réticulation: 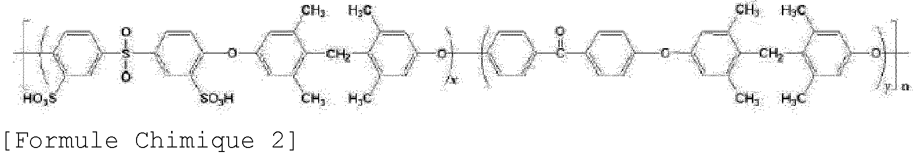 où x et y sont supérieurs à 0, x + y = 1 et n est un entier supérieur ou égal à 1, ou
(iii) une solution comprenant un monomère à base de styrène choisi de préférence parmi un ou plusieurs dans le groupe constitué de l'alpha-méthylstyrène, le styrène et le trifluorostyrène, la vinylpyrrolidone, un agent de réticulation choisi de préférence parmi le divinylbenzène, le méthylènebisacrylamide ou le tétraméthylènebisacrylamide et un initiateur choisi de préférence parmi le N,N'-azobisisobutyronitrile (AIBN), le peroxyde de benzoyle (BPO) ou le peroxyde de cumyle, dans le substrat polymère poreux, et ensuite effectuer une polymérisation par réticulation.

2. Une membrane échangeuse de cation pour un dispositif de déionisation capacitive (FCDi) à électrode d'écoulement, comprenant:
un substrat polymère poreux; et
un électrolyte polymère incorporé dans des pores du substrat polymère poreux, dans lequel le polymère électrolyte est formé en incorporant une solution comprenant un polymère aromatique réticulable représenté par la Formule Chimique 1 ci-dessous, un monomère ayant un cycle aliphatique ou aromatique avec un groupe vinyle lié à celui-ci de préférence choisi parmi un monomère de vinylpyrrolidone, un monomère de styrène ou un monomère de divinylbenzène, et un initiateur, dans le substrat polymère poreux et ensuite effectuer une polymérisation par réticulation: 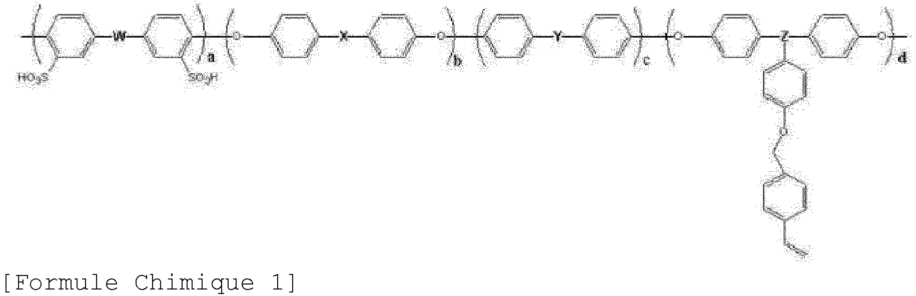 où W, X et Y sont chacun indépendamment un ou plusieurs choisis parmi SO₂, CO₂, CH₃-CH₂-CH₃, CF₃-CF₂-CF₃ et S, Z est l'un quelconque choisi parmi C-CH₃, C-CF₃ et C-H, et a + c = b + d.

3. Une membrane échangeuse de cation pour un dispositif de déionisation capacitive (FCDi) à électrode d'écoulement, comprenant:
un substrat polymère poreux; et
un électrolyte polymère incorporé dans des pores du substrat polymère poreux, dans lequel le polymère électrolyte est formé en incorporant une solution comprenant un polymère aromatique réticulable représenté par la Formule Chimique 2 ci-dessous dans le substrat polymère poreux et puis effectuer une polymérisation par réticulation: 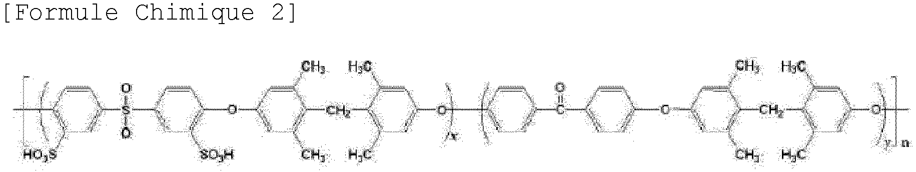 où x et y sont supérieurs à 0, x + y = 1 et n est un entier supérieur ou égal à 1.

4. Une membrane échangeuse de cation pour un dispositif de déionisation capacitive (FCDi) à électrode d'écoulement, comprenant:
un substrat polymère poreux; et
un électrolyte polymère incorporé dans des pores du substrat polymère poreux, dans lequel le polymère électrolyte est formé en incorporant une solution comprenant un monomère à base de styrène choisi de préférence parmi un ou plusieurs dans le groupe constitué de l'alpha-méthylstyrène, le styrène et le trifluorostyrène, la vinylpyrrolidone, un agent de réticulation choisi de préférence parmi le divinylbenzène, le méthylènebisacrylamide ou le tétraméthylènebisacrylamide et un initiateur choisi de préférence parmi le N,N'-azobisisobutyronitrile (AIBN), le peroxyde de benzoyle (BPO) ou le peroxyde de cumyle, dans le substrat polymère poreux, et ensuite effectuer une polymérisation par réticulation.

5. Procédé de fabrication de la membrane échangeuse de cations selon l'une quelconque des revendications 1 à 4 pour un dispositif de déionisation capacitive à électrode d'écoulement, comprenant les étapes de :
(a) imprégner un substrat polymère poreux avec (i) une solution comprenant un polymère aromatique réticulé représenté par la Formule Chimique 1 ci-dessous, un monomère ayant un cycle aliphatique ou aromatique avec un groupe vinyle lié à celui-ci, et un initiateur, (ii) une solution comprenant un polymère aromatique réticulable représenté par la Formule Chimique 2 ci-dessous, ou (iii) une solution comprenant un monomère à base de styrène, une vinylpirrolidone, un agent réticulant et un initiateur, et
(b) appliquer de la chaleur ou de la lumière au substrat polymère poreux imprégné de la solution obtenue en (a), formant ainsi un électrolyte polymère réticulant polymérisé dans le substrat polymère poreux: 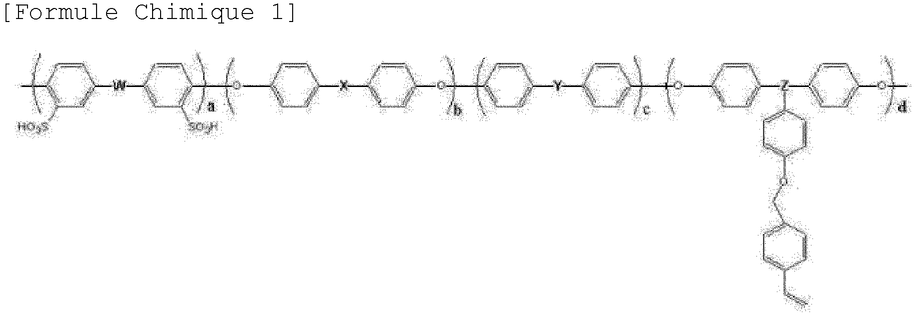 où W, X et Y sont chacun indépendamment un ou plusieurs choisis parmi SO₂, CO₂, CH₃-CH₂-CH₃, CF₃-CF₂-CF₃ et S, Z est l'un quelconque choisi parmi C-CH₃, C-CF₃ et C-H, et a + c = b + d, 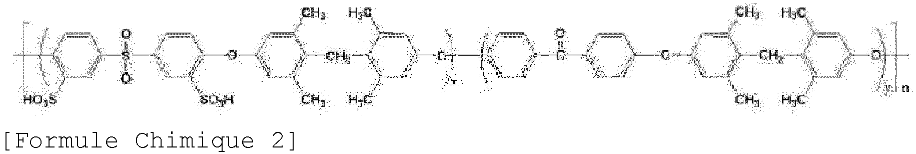 où x et y sont supérieurs à 0, x + y = 1 et n est un entier supérieur ou égal à 1,
dans lequel l'étape (b) est réalisée dans des conditions dans lesquelles un film de polyéthylènetéréphtalate (PET) est formé d'un côté et l'autre côté du substrat polymère poreux est imprégné de la solution.
